(19) Europäisches Patentamt
European Patent Office
Office européen des brevets

(11) EP 4 350 847 A1

(12) **EUROPEAN PATENT APPLICATION**
published in accordance with Art. 153(4) EPC

(43) Date of publication:
**10.04.2024 Bulletin 2024/15**

(21) Application number: **22810944.3**

(22) Date of filing: **15.03.2022**

(51) International Patent Classification (IPC):
***H01M 12/06*** *(2006.01)* ***C08L 101/02*** *(2006.01)*
***C08J 5/22*** *(2006.01)* ***H01M 4/62*** *(2006.01)*
***H01M 4/86*** *(2006.01)* ***H01B 1/06*** *(2006.01)*
***H01M 8/10*** *(2016.01)* ***H01M 8/102*** *(2016.01)*
***H01M 8/1088*** *(2016.01)*

(52) Cooperative Patent Classification (CPC):
**C08J 5/22; C08L 101/02; H01B 1/06; H01M 4/62; H01M 4/86; H01M 8/10; H01M 8/102; H01M 8/1088; H01M 12/06;** Y02E 60/50

(86) International application number:
**PCT/JP2022/011700**

(87) International publication number:
**WO 2022/249666 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.05.2021 JP 2021088830**

(71) Applicant: **National Institutes for Quantum Science and Technology**
**Chiba 263-8555 (JP)**

(72) Inventors:
- **YOSHIMURA, Kimio**
  **Chiba-shi, Chiba 263-8555 (JP)**
- **Ahmed Mohamed Ahmed Mahmoud**
  **Chiba-shi, Chiba 263-8555 (JP)**
- **YU, Hwan-Chul**
  **Chiba-shi, Chiba 263-8555 (JP)**
- **ZHAO, Yue**
  **Chiba-shi, Chiba 263-8555 (JP)**
- **HIROKI, Akihiro**
  **Chiba-shi, Chiba 263-8555 (JP)**
- **MAEKAWA, Yasunari**
  **Chiba-shi, Chiba 263-8555 (JP)**

(74) Representative: **Gille Hrabal**
**Partnerschaftsgesellschaft mbB**
**Patentanwälte**
**Brucknerstraße 20**
**40593 Düsseldorf (DE)**

# (54) RESIN COMPOSITION, RESIN COMPOSITION PRODUCTION METHOD, AND ELECTROCHEMICAL DEVICE

(57) Objectives of the present invention are to provide a resin composition having excellent alkaline durability and a method for producing said resin composition and also to provide an electrochemical device comprising said resin composition to achieve improved output power and durability. In order to solve the problems, provided are: a resin composition comprising one or more repeat unit represented by formula (1); a method for producing same; and an electrochemical device comprising said resin composition represented by formula (1) wherein, E is a spacer and is selected from a benzene ring, a benzene derivative of which at least one hydrogen atom in the benzene ring is substituted with a hydrocarbon group having 1-6 carbon atoms, or a carbon chain having at least 2 carbon atoms and optionally including a heteroatom, Im is selected from the ion conductive group consisting of an imidazole ring, each of $R^1$-$R^5$ is independently selected from a carbon chain having 1-10 carbon atoms and including hydrogen, halogen, or a heteroatom, and X represents an anion.

EP 4 350 847 A1

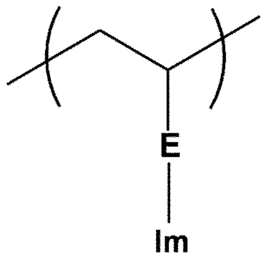

(1)

Im : 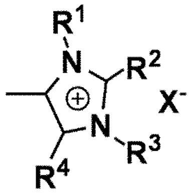 or 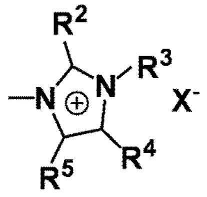 or 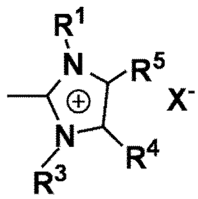

## Description

FIELD OF THE INVENTION

The present invention relates to a resin composition and a resin composition production method. The present invention relates to an electrochemical device that uses the resin composition as a material for an electrolyte layer and/or an electrode.

BACKGROUND ART

Generally, it is widely practiced to design a structural unit of a resin composition and provide desirable functions to the resin composition. Functional resin compositions are widely used as materials for various apparatuses (devices).

An example of the apparatus using a functional resin composition includes electrochemical devices that converts electric energy to chemical energy. A specific example of the functional resin composition includes materials for an electrolyte layer (an electrolyte membrane) and an electrode in electrochemical devices.

A Fuel cell and a metal-air battery are known as those of such electrochemical devices. The fuel cell and the metal-air battery use air (oxygen) as an active material on a positive electrode side to convert energy associated with a chemical reaction with the active material (fuel, metal, or etc.) on a negative electrode side to electric energy, and thus, have an advantage of higher energy conversion efficiency. Among them, in particular, a solid polymer fuel cell can achieve high output power even with a small size because of its highly active catalyst, in addition to its low operation temperatures and low resistance of the electrolyte, and therefore early practical use of it is expected.

For example, a proton conductive fuel cell using hydrogen as a fuel has high energy efficiency so that it is a promising alternative energy and can significantly reduce emission of carbon dioxide to become a means for the prevention of global warming, so that, the development of the proton conductive fuel cell is expected as power sources for domestic cogenerations and automobiles.

Recentry, attention has been focused on an anion conductive fuel cell using non-platinum that can use methanol and hydrazine hydrate as a fuel besides hydrogen and has been reported to have three times higher output power than the proton conductive fuel cell. As for the anion conductive fuel cell, the application to power supplies for disaster countermeasures such as fuel cell vehicles while particularly focusing on compact cars and wireless base stations is particularly promoted from its simplicity and safety of mounting as a liquid fuel and high output power density. In addition, since the anion conductive fuel cell does not require a strong acid condition unlike the proton conductive fuel during operation, it is the greatest advantage of the anion conductive fuel cell that instead of a noble metal such as platinum, inexpensive iron or cobalt can be used for electrodes, which cannot be used in the proton conductive fuel cell operating in the strong acid condition, can be utilized for an electrode. Therefore, a low-cost and high-output power fuel cell can be expected.

In such an anion conductive fuel cell, a electrolyte membrane (hereinafter referred to as "an anion conductive electrolyte membrane") works as so-called "a electrolyte" for conducting a hydroxide ion (an anion), further as "a separator "for the prevention of direct mixing of methanol or hydrazine with oxygen. Because of this, it is required for an anion conductive electrolyte membrane to have high ionic conductivity, chemical stability and heat resistance enduring a long-term use in an alkaline aqueous solution at a high temperature (> 60°C) as the operating condition, and also to have stable water retentivity of the membrane for high ionic conductivity. On the other hand, the membrane as the separator must have excellent mechanical strength and dimensional stability, and high barrier property against methanol, hydrazine, and oxygen. However, currently, an anion conductive electrolyte membrane of practical use has not yet been developed, and the present anion conductive electrolyte membrane has the largest problem in its remarkably low alkaline durability in addition to its unsatisfactory ionic conductivity, mechanical strength, and fuel permeability, as compared with those of the proton conductive electrolyte membrane with favorable results of utilization, starting with Nafion (registered trademark).

Therefore, the development of the anion conductive electrolyte membrane to meet above requirement has been actively attempted until now. For example, an anion conductive electrolyte membrane, for which a hydrocarbon film such as porous polyethylene is used as a substrate in which pores cross-linked anion exchange resin is filled, is developed (Patent Documents 1 to 3). A production method of an anion conductive electrolyte membrane, in which a polymerization product of a mixture of haloalkyl styrene, elastomer, and an epoxy compound is used as a substrate membrane to introduce an alkyl ammonium salt by quaternization reaction (Patent Document 4), and another production method, in which the radiation graft polymerization of anion exchange group precursor monomer followed by the introduction of alkyl ammonium salt to a substrate made of a fluorine-based polymer (Patent Document 5), are disclosed.

Patent Document 1: Japanese Unexamined Patent Application Publication No.JP-A-2002-367626

Patent Document 2: Japanese Unexamined Patent Application Publication No.JP-A-2009-203455
Patent Document 3: Japanese Unexamined Patent Application Publication No.JP-T-2019-518809
Patent Document 4: Japanese Unexamined Patent Application Publication No.JP-A-2011-202074
Patent Document 5: Japanese Unexamined Patent Application Publication No.JP-A-2000-331693

## SUMMARY OF THE INVENTION

## TECHNICAL PROBLEMS

As described in Patent Documents 1 to 5, the anion membrane of conventional art, has a very high water uptake and not have enough strength for durable use because the anion exchange group in the membrane is an alkyl ammonium salt obtained by quaternization of alkylamine including mainly trimethylamine. While an alkaline-resistant anion conductive electrolyte membrane with a partial imidazolium salt as an anion exchange group that inhibits a nucleophilic substitution reaction has also been reported, an elimination reaction occurs due to another decomposition reaction, and thus the alkaline durability is insufficient.
Therefore, it is an objective of the present invention to provide a resin composition having excellent alkaline durability and a production method of this resin composition.
It is an objective of the present invention to provide an electrochemical device having excellent power output and durability made from the above-described resin composition.

## SOLUTION TO THE PROBLEM

As a result of intensive study on the above-described problem, the inventors have found it possible to provide alkaline durability and functions for the improvement in ionic conductivity of the resin composition, by providing certain distance between the main chain and the ion conductive group and by introducing a bulky substituent as a chemically protecting group into the starting points of a nucleophilic substitution reaction and an elimination reaction, which are the main cause of decomposition by alkali, it becomes possible to impart alkaline durability, and has completed the present invention.
Namely, the present invention provides the following resin composition, resin composition production method, and electrochemical device.
A first aspect in accordance with the present invention provides a resin composition comprising one or more first repeat unit represented by formula (1) below,

[Chemical structure 1]

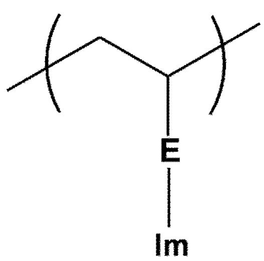

(1)

Im : 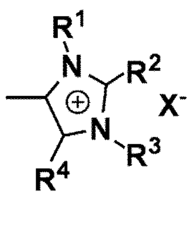 or 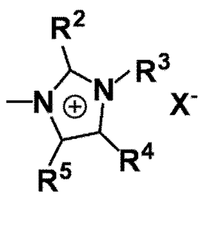 or 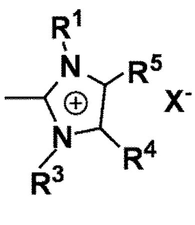

wherein E is a spacer selected from a benzene ring, a benzene derivative of which at least one hydrogen atom in the benzene ring is substituted with a hydrocarbon group having 1 to 6 carbon atoms, or a carbon chain which has 2 or more carbon atoms and optionally includes a heteroatom, Im is selected from the ion conductive group consisting of an imidazole ring, each of $R^1$ to $R^5$ is independently selected from a carbon chain having 1 to 10 carbon atoms including hydrogen, halogen or a heteroatom, and X represents an anion).

According to this aspect of the present invention, the resin composition comprising one or more first repeat unit represented by formula (1), having a spacer (E) between the main chain and the ion conductive group (Im), can have improved ionic conductivity and alkaline durability. In addition, the imidazole ring of the ion conductive group (Im) can work as an inhibitor from the elimination reactionat β hydrogen, the hydrolysis reaction by a nucleophilic attack on the 2nd position, and the oxidative decomposition reaction against the 4th position and the 5th position and thereby the resin composition can have further improvement in alkaline durability.

Another aspect in accordance with the present invention provides the resin composition according to formula (1), wherein the resin composition further comprises a structural unit represented by formula (2) below,

[Chemical structure 2]

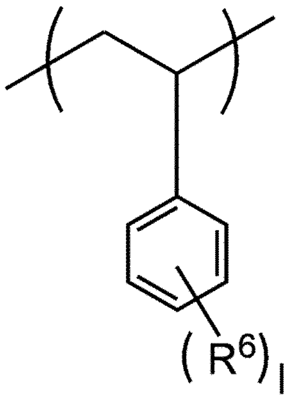

**(2)**

wherein, $R^6$ is selected from a carbon chain which has 1 to 10 carbon atoms and includes hydrogen, halogen or a heteroatom, ***l*** represents an integer selected from 0 to 5).

According to this aspect of the present invention, the resin composition comprising the repeat unit represented by the combination of formula (1) and formula (2), can reduce repulsion between the positive charges of the ion conductive group (Im) in formula (1), and by the steric protection effect of the benzene ring, can further inhibit the nucleophilic substitution reaction of the carbon atom at a bonding position between the spacer (E) and the ion conductive group (Im) and the decomposition reaction of the imidazole ring in the ion conductive group (Im). Thereby the composition can have further improvement in alkaline durability.

In addition, another aspect in accordance with the present invention, provides the resin composition according to formula (1), of which imidazole ring structure of Im is replaced with that in a repeat unit represented by formula (3) below,

[Chemical structure 3]

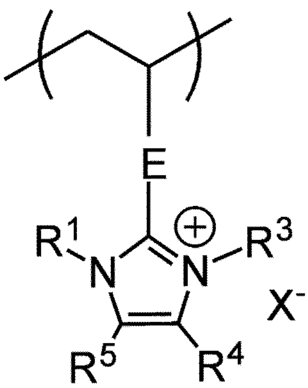

**(3)**

Wherein E is a spacer selected from a benzene ring, a benzene derivative of which at least one hydrogen atom in the benzene ring is substituted with a hydrocarbon group having 1 to 6 carbon atoms, or a carbon chain having 2 or more carbon atoms and optionally including a heteroatom, at least one of $R^1$ or $R^3$ has 2 or more carbon atoms, each of $R^1$, $R^3$, $R^4$ and $R^5$ independently is a carbon chain which has 1 to 10 carbon atoms and includes hydrogen, halogen or a heteroatom, and X represents an anion).

According to this aspect of the present invention, the resin composition has this bulky structure having at least one of the protecting groups ($R^1$ and $R^3$) bonded to the nitrogen atom of the imidazole ring in the ion conductive group (Im), can have enhanced hydrophobicity, reduced repulsion between the positive charges of the ion conductive group (Im) and inhibit the elimination reaction and the decomposition reaction related to the ion conductive group (Im). Thereby the resin composition can have further improved ionic conductivity and alkaline durability.

Further another aspect in accordance with the present invention, the resin composition according to any one of formula (1) or formula (3), wherein the ionic conductivity is 40 mS/cm or more, and the maintenance factor of the ionic conductivity is 70% or more after immersion in 1M-potassium hydroxide aqueous solution heated to 80°C for 200 hours.

According to this aspect of the present invention, because the ionic conductivity and the maintenance factor of i the resin composition meet specific values, it can be utilized as a practical resin composition with functions related to the ionic conductivity and the alkaline durability. In particular, when this resin composition is utilized as a material in an electrochemical device such as a fuel cell and a metal-air battery, it can be sufficiently practical material for these applications.

Another aspect in accordance with the present invention provides a production method of a resin composition comprising one or more first repeat unit represented by the following formula (1), comprising the step of introducing a spacer and/or an ion conductive group (Im) of the following formula (1) by the radiation graft polymerization,

[Chemical structure 4]

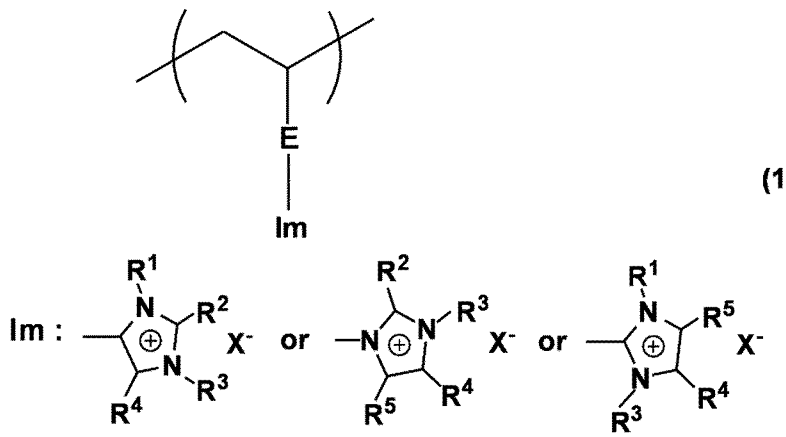

Im : or or

(1)

wherein, E is a spacer selected from a benzene ring, a benzene derivative of which at least one hydrogen atom in the benzene ring is substituted with a hydrocarbon group having 1 to 6 carbon atoms, or a carbon chain which has 2 or more carbon atoms and optionally includes a heteroatom, Im is selected from the ion conductive group consisting of an imidazole ring, each of $R^1$ to $R^5$ is independently selected from a carbon chain which has 1 to 10 carbon atoms and includes hydrogen, halogen or a heteroatom, and X represents an anion).

According to this aspect of the present invention, by using the radiation graft polymerization that has a high degree of freedom in designing polymer chains and can introduce various ion conductive groups by a covalent bond, it becomes possible to easily produce the resin composition having the structural unit as designed.

Another aspect in accordance with the present invention provides an electrochemical device comprising:an electrolyte layer, and a pair of electrodes between which the electrolyte layer is sandwiched and which are arranged at a position facing the electrolyte layer, wherein the electrolyte layer and/or the electrode comprises the resin composition according to any one of claims 1 to 4.

According to this aspect of the present invention, usage of the resin composition having high ionic conductivity and alkaline durability as a material for the electrolyte layer and/or the electrode in the electrochemical device makes it possible to have improved output power and durability.

In accordance with an aspect of the present invention provides an electrochemical device is a fuel cell or a metal-air battery.

According to this aspect of the present invention, the advantage of high ionic conductivity and alkaline durability in the above-described resin composition makes it possible to solve the problems of low output power and low durability in conventional fuel cells or metal-air batteries and can provide a highly practical fuel cell or metal-air battery.

EFFECTS OF THE INVENTION

In accordance with the present invention, it is possible to provide a resin composition having excellent alkaline durability and a production method of this resin composition.
In accordance with the present invention, usage of the above-described resin composition makes it possible to provide an electrochemical device with improvement of output power and durability.

BRIEF DESCRIPTION OF DRAWINGS

Fig. 1 is a schematic cross sectional view of an electrochemical device of an embodiment in accordance with the present invention.
Fig. 2 shows an experimental result data showing output power tests of the electrochemical device of an embodiment in accordance with the present invention and a comparative example.
Fig. 3 shows an experimental result of a durability test of the electrochemical device of an embodiment in accordance with the present invention and a comparative example.

DESCRIPTION OF THE PREFERRED EMBODIMENTS

Hereinafter a resin composition, a resin composition production method, and an electrochemical device of embodiments in accordance with the present invention will be described in detail.
The resin composition, the production method, and the electrochemical device described in the embodiments are merely exemplified for the purpose of explaining the present invention, and the present invention is not limited thereto.

[RESIN COMPOSITION]

(Structure of Resin Composition)

A resin composition in an embodiments of the present invention comprising one or more first repeat unit represented by the following formula (1),

[Chemical structure 5]

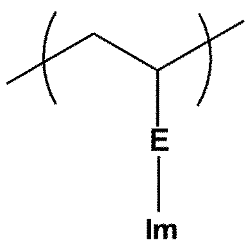

**(1)**

Im : 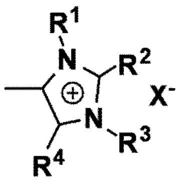 or 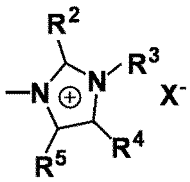 or 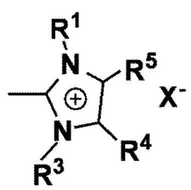

wherein E is a spacer selected from a benzene ring, a benzene derivative of which at least one hydrogen atom is substituted with a hydrocarbon group having 1 to 6 carbon atoms, or a carbon chain which has 2 or more carbon atoms and optionally includes a heteroatom, Im is selected from the ion conductive group consisting of an imidazole ring, each of $R^1$ to $R^5$ is independently selected from a carbon chain having 1 to 10 carbon atoms including hydrogen, halogen or a heteroatom, and $X^-$ represents an anion)..
The spacer (E) in formula (1) keeps a distance between the main chain and the ion conductive group (Im). Thereby it becomes possible to improve ionic conductivity as the resin composition. In addition, it becomes possible to improve alkaline durability as the resin composition.

The spacer (E) is selected from a benzene ring, a benzene derivative of which at least one hydrogen atom in the benzene ring is substituted with a hydrocarbon group having 1 to 6 carbon atoms, or a carbon chain having at least 2 or more carbon atoms and optionally including a heteroatom. The heteroatom is preferably selected from nitrogen (N), oxygen (O), phosphorus (P), and sulfur (S).

Here, the distance between the main chain and the ion conductive group (Im) is preferably set to be within a range where the ion conductive group (Im) is under an influence of hydrophobicity of the main chain while maintaining a certain distance between the main chain and the ion conductive group (Im). Thereby it becomes possible to inhibit a hydrolysis reaction by nucleophilic attack on the ion conductive group (Im) and to further improve the alkaline durability while keeping high ionic conductivity of the resin composition.

Therefore, the spacer € is preferably selected from a benzene derivative of which at least one of the hydrogen atoms in the benzene ring is substituted with a hydrocarbon group having 1 to 3 carbon atoms, or a carbon chain having 2 to 5 carbon atoms and optionally including a heteroatom, in addition to a benzene ring. Furthermore, considering a production yield of the resin composition, ease of setting reaction conditions, availability of reaction raw materials, and etc., the spacer € is more preferably selected from a benzene ring or a benzene derivative in which at least one of the hydrogen atoms in the benzene ring is substituted with a hydrocarbon group having 1 to 3 carbon atoms.

The ion conductive group (Im) in formula (1) has a protecting groups ($R^1$ to $R^5$) at each position of the imidazole ring.

An anion conductive electrolyte membranes of conventional art which use including alkylammonium hydroxide salt as an ion conductive group are significantly unstable due to their strong basicity and do not have sufficient mechanical strength due to their high water uptake property.

On the other hand, in an ion conductive group (Im) in an embodiment of the present invention, by having the imidazole ring, as indicated in formula (1), positive electric charges are conjugatively stabilized and the basicity is reduced. Thereby it is possible to reduce water uptake as the resin composition, and it becomes possible to obtain sufficient mechanical strength (stabilization) as an anion conductive electrolyte membrane.

Introduction of a protecting groups ($R^1$ to $R^5$) in the ion conductive group (Im) makes it possible to inhibit the elimination reaction at β hydrogen, the hydrolysis reaction due to the nucleophilic attack on the 2$^{nd}$ position, and the oxidative decomposition reaction on the 4$^{th}$ position and the 5$^{th}$ position. Thereby it becomes possible to further improve the alkaline durability as the resin composition, in addition to an effect of disposing the spacer (E).

$R^1$ to $R^5$ in formula (1) are not particularly limited as long as these are each independently selected from carbon chains having 1 to 10 carbon atoms containing hydrogen, a halogen, or a heteroatom. The heteroatom is preferably selected from nitrogen (N), oxygen (O), phosphorus (P), and sulfur (S).

In $R^1$ to R", "containing a halo"en" means that it maycontain, for example, a halogeno group such as a fluoro group, a chloro group, a bromo group, and an iodine group.

In $R^1$ to $R^5$, " containing a heteroatom" means that it maycontain, for example, a functional group containing nitrogen atoms such as an amino group ($-NR_2$), an ammonium group ($-NR_3^+$), and a cyano group (-CN), a functional group containing oxygen atoms such as a hydroxyl group (-OH) and an alkoxy group (-OR), a functional group containing sulfur atoms such as a thiol (-SH), a functional group containing a plurality of heteroatoms such as a nitro group ($-NO_2$), an isocyanate group (-NCO), phosphonic acid ($-P(=O)(OH)_2$), phosphoric acid ($-H_2PO_4$), and thioester (-C(=O)S), and also means that it may include a linking group including a heteroatom such as an imino group (-NR-), an ether group (-O-), an amido group (-C(=O)-NR-), a phosphoric acid amido group (-P(=O)-NR-), a phosphine oxide group (-P(=O)R-), a phosphate ester group ($-PO_4H-$), a sulfide group (-S-), a disulfide group (-S-S-), and a sulfone group ($-SO_2-$) inside or at an end of a carbon skeleton.

Therefore, as $R^1$ to $R^5$, for example, a hydrocarbon group having two carbon atoms containing an amino group such as $-CH_2-CH_2-NH_2$, an imino group such as $-CH_2-NH-CH_3$ inside the carbon skeleton, and an imino group such as $-NH-CH_2-CH_3$ at the end of the carbon skeleton are included.

The carbon number in $R^1$ to $R^5$ is usually 1 or more and 10 or less, preferably 6 or less, and more preferably 3 or less. $R^1$ to $R^5$ are not limited to a straight-chain saturated hydrocarbon groups but may be a hydrocarbon groups that may have a branched structure and/or a cyclic structure and may further have an unsaturated bond.

Example of a carbon chain (a hydrocarbon group) of $R^1$ to $R^5$ having 1 to 10 carbon atoms include, for example, a straight-chain hydrocarbon groups having 1 to 10 carbon atoms such as a methyl group, an ethyl group, a propyl group, an n-butyl group, an n-pentyl group, an n-hexyl group, an n-heptyl group, an n-octyl group, an n-nonyl group, and an n-decyl group, and branched chain hydrocarbon groups having 1 to 10 carbon atoms such as an i-propyl group, an i-butyl group, an s-butyl group, a t-butyl group, an i-pentyl group, an s-pentyl group, a t-pentyl group, a neopentyl group, an i-hexyl group, a 3-methylpentyl group, a 2-methylpentyl group, an 1-methylpentyl group, an 1-ethylbutyl group, a 2-ethylbutyl group, an 1,2-dimethylbutyl group, and a 2,3-dimethylbutyl group, and cyclic hydrocarbon groups having 3 to 10 carbon atoms such as a cyclohexyl group, a cyclopentylmethyl group, and a cyclohexylmethyl group. Example of a carbon chain of $R^1$ to $R^5$ having 1 to 10 carbon atoms include preferably a hydrocarbon group having 3 to 8 carbon atoms, more preferably a methyl group, an ethyl group, a n-propyl group, a n-butyl group, a n-pentyl group, and a n-hexyl group, further preferably a methyl group, a ethyl group, a n-propyl group.

While X in formula (1) is an anion that serves as a counter ion to an ion conductive group (Im), it can form an imidazolium salt, and specific kinds of anions are not particularly limited. Therefore, while examples of a X include, for example, halogen ions such as a hydroxide ion, a carbonate ion, a nitrate ion, a sulfate ion, a phosphate ion, and a halogen ion such as a chloride ion, a bromide ion, and an iodide ion, a hydroxide ion is particularly preferable.

In the resin composition of this embodiment, an example of the repeat unit based on formula (1) is represented by formula (4),

[Chemical structure 6]

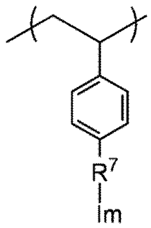

(4)

Im : 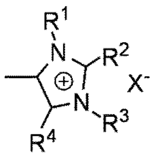 or 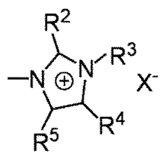 or 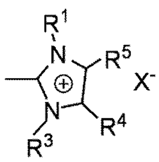

wherein, $R^7$ is selected from a hydrocarbon group having a single bind or having 1 to 6 carbon atoms, Im is selected from the ion conductive group consisting of an imidazole ring, $R^1$ to $R^5$ are independently selected from a carbon chain having 1 to 10 carbon atoms and including hydrogen, a halogen or a heteroatom, and X represents an anion).

Since the resin composition of this embodiment comprises the repeat unit of formula (4), it becomes possible to maintain easily and reliably a suitable distance between the main chain and the ion conductive group (Im) by a rigid benzene ring skeleton. In addition, since positive electric charges are stabilized by n electrons of the benzene ring in formula (4), the resin composition of this embodiment has an advantages of stabilizing the resin composition, and etc..

While the resin compositions in the embodiment of the present invention are not particularly limited as long as they have the repeat unit represented by the above-described formula (1), in addition to this, it is preferable to further have a repeat unit represented by formula (2) below,

[Chemical structure 7]

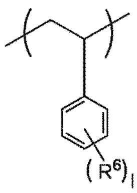

(2)

wherein, $R^6$ is selected from a carbon chain which has 1 to 10 carbon atoms and includes hydrogen, halogen or the heteroatom, l represents an integer selected from 0 to 5).

similarly to $R^1$ to $R^5$ described above, $R^6$ in formula (2) is the carbon chain having 1 to 10 carbon atoms and including hydrogen, the halogen, or the heteroatom, and is not particularly limited. The heteroatom is preferably selected from nitrogen (N), oxygen (O), phosphorus (P), and sulfur (S).

Similarly to $R^1$ to $R^5$ described above, the carbon number of $R^6$ is usually 1 or more and 10 or less, preferably 6 or less, more preferably 3 or less. $R^6$ is not limited to the straight-chain saturated hydrocarbon group but is the hydrocarbon group that may have the branched structure and/or the cyclic structure and may further have the unsaturated bond.

$R^6$ preferably has a halogeno group in a carbon chain having 1 to 3 carbon atoms, and examples of the halogeno group include, a chloromethyl group, a bromomethyl group, a chloroethyl group, a bromoethyl group, a chloropropyl group, and a bromopropyl group, and etc..

A resin composition in an embodiment of the present invention comprising a repeat unit that is the combination of formula (1) and formula (2) can reduce repulsion between the positive electric charges of the ion conductive group (Im) in formula (1) and further inhibit the nucleophilic substitution reaction to the carbon atom at a bonding position between the spacer (E) and the ion conductive group (Im) and a decomposition reaction of the imidazole ring in the ion conductive group (Im) due to a steric protection effect of the benzene ring. Thereby it becomes possible to further improve the alkaline durability of the resin composition.

A repeat unit of the resin composition in an embodiment of the present invention, described above according to a combination of formula (1) and formula (2), is represented by formula (5),

[Chemical structure 8]

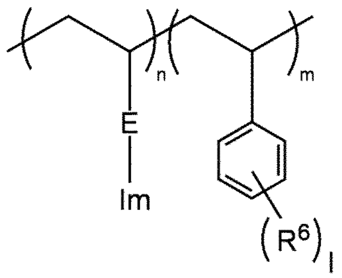

**(5)**

Im : 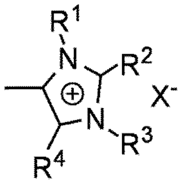 or 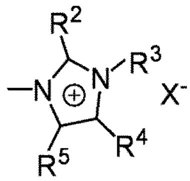 or 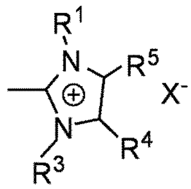

Wherein, E is a spacer and is selected from a benzene ring, a benzene derivative of which at least one hydrgogen atom in the benzene ring is substituted with a hydrocarbon group having 1 to 6 carbon atoms, or a carbon chain having at least 2 or more carbon atoms and optionally including a heteroatom, Im is selected from the ion conductive group consisting of an imidazole ring, each of $R^1$ to $R^6$ is independently selected from a carbon chain having 1 to 10 carbon atoms and including hydrogen, halogen, or a heteroatom, X represents an anion, and n and m represent a mole ratio).

Here, in formula (5), when the mole ratio (value of m to n) of the repeat unit based on formula (2) to that of (1)becomes too small, a sufficient steric protection effect of the benzene ring cannot be obtained. On the other hand, in formula (5), it is undesirable that the mole ratio (value of m to n) becomes too large to make the resin composition more hydrophobic than necessary. Therefore, the value of the mole ratio (n:m) in formula (5) is preferably n:m = 8:2 to 2:8, more preferably n:m = 7:3 to 4:6.

An example of another aspect of the resin composition in the embodiment of the present invention preferably has a repeat unit represented by formula (3) below,

[Chemical structure 9]

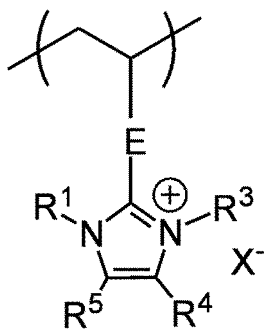

**(3)**

wherein E is a spacer selected from a benzene ring, a benzene derivative of which at least one hydrogen atom in the benzene ring is substituted with a hydrocarbon group having 1 to 6 carbon atoms, or a carbon chain having 2 or more carbon atoms and optionally including a heteroatom, at least one of $R^1$ or $R^3$ has 2 or more carbon atoms, each of $R^1$, $R^3$, $R^4$ and $R^5$ independently is selected from a carbon chain which has 1 to 10 carbon atoms and includes hydrogen, halogen or a heteroatom, and $X^-$ represents the anion).

The spacer (E) and the protecting groups ($R^1$, $R^3$, $R^4$, $R^5$) in the formula (3) are similar to the spacer and the protecting groups in the above-described formula (1). However, it is assumed that at least either $R^1$ or $R^3$ has 2 or more carbon atoms.

In this case, considering the stability (low water uptake property), the production yield of the res21ompositionion, and etc., each of the carbon numbers of $R^1$ and $R^3$ are preferably 6 or less and is also selected from different number each other.

Because at least one of the protecting groups ($R^1$ and $R^3$) bonded to the nitrogen atom of the imidazole ring is bulky substrate with carbon chain having 2 or more carbon atoms among the protecting groups ($R^1$, $R^3$, $R^4$, $R^5$) in the formula (3), it becomes possible to enhance hydrophobicity, reduce the repulsion between the positive charges of the ion conductive group (Im) and inhibit the elimination reaction and the decomposition reaction of the ion conductive group (Im). Thereby the resin composition can have further improvement in the ionic conductivity and the alkaline durability.

In the resin composition having the repeat unit of the formula (3), since the ion conductive group (Im) itself has a bulky protecting group, it becomes possible to inhibit the decomposition reaction of the ion conductive group (Im) even without steric protection effect by providing the repeat unit of the formula (2). For this reason, in the resin composition having the repeat unit of formula (3), while it is not necessarily required to actively have the repeat unit of formula (2), combination of the repeat unit of the formula (3) and that of formula (2) is not excluded.

(Production Method of Resin Composition)

The resin composition in the embodiment of the present invention can be produced by a method comprising the step of introducing a spacer (E) and/or an ion conductive group (Im) in the formula (1) by the radiation graft polymerization.

It is known that the radiation graft polymerization has a high degree of freedom in designing polymer chains and can introduce various ion conductive groups by covalent bonds. For this reason, by using the radiation graft polymerization in the production of the resin composition in the embodiment of the present invention, it becomes possible to easily produce the resin composition having the repeat unit as indicated in the formula (1) or the formula (2).

In an embodiment of the method of producing the resin composition in accordance with the present invention comprises introducing a compound having a structure that becomes the spacer (E) in the formula (1) into a polymer substrate by the radiation graft polymerization and replacing part of the introduced functional group with a compound having a structure that becomes an on conductive group (Im) in formula (1). This production method will be specifically exemplified in Example 1-1 described later.

yet another embodiment of the method of producing the resin composition in accordance with the present invention comprises introducing a compound having a structure that becomes the spacer (E) and an ion conductive group (Im) in the formula (1) into a polymer substrate by the radiation graft polymerization. This production method will be specifically exemplified in Example 1-2, described later.

Hereinafter, in the explanation related to the production of the resin composition, it is assumed that a compound (monomer) that is introduced into a polymer substrate by the radiation graft polymerization and includes the structure of the spacer (E) and/or the ion conductive group (Im) in the formula (1) is referred to as "a starting raw material."

Here, as the polymer substrate, ones made of fluorine-based polymer, olefin-based polymer, aromatic polymers, and etc. are used.

Examples of the fluorine-based polymers include polytetrafluoroethylene (PTFE), tetrafluoroethylene-hexafluoropropylene copolymer (FEP), tetrafluoroethylene-perfluoroalkylvinyl ether copolymer (PFA), polyvinylidene fluoride (PVDF), ethylene-tetrafluoroethylene copolymer (ETFE), polyvinyl fluoride (PVF), and polychloro-trifluoroethylene copolymer (ECTFE). When a polymer substrate made of a fluorine-based polymer is used, by preliminarily cross-linking a fluorine-based polymer, heat resistance and swelling inhibitory capacity of the resin composition can be improved, and in particular, performance as an anion conductive electrolyte membrane can be improved.

Examples of the olefin-based polymer include low density, high density, and ultra-high molecular weight polyethylene and polypropylene. Polymers having trimethylpentane as a polymerization unit can also be included. When a polymer substrate made of an olefin-based polymer is used, by preliminarily cross-linking the olefin-based polymer, the heat resistance and swelling inhibitory capacity of the resin composition can be further improved.

Examples of an aromatic polymer include polyimide, polyamideimide, polyetherimide, polyethylene naphthalate, liquid crystalline aromatic polymer, polyether ether ketone, polyphenylene oxide, polyphenylene sulfide, polysulfone, and polyethersulfone, which are referred to as high-performance resin (super engineering plastic). When a polymer

substrate made of an aromatic polymer is used, by preliminarily cross-linking the aromatic polymer, the heat resistance and swelling inhibitory capacity of the resin composition can be further improved.

As the resin composition in accordance with the embodiment of the present invention, in particular, for the purpose of improving the durability and suppressing the swelling of the anion conductive electrolyte membrane, a composite material of a thermoplastic resin and various kinds of inorganic fillers or a polymer alloy can also be used as the polymer substrate.

Specific methods, conditions, and etc. of the radiation graft polymerization are not particularly limited, and known methods can be appropriately employed. While, for example, specific methods include a simultaneous irradiation method in which a polymer substrate and a starting raw material are simultaneously irradiated with radiation to undergo graft polymerization and a pre-irradiation method in which a polymer substrate is first irradiated with radiation, and then the polymer substrate is brought into contact with a starting raw material to undergo graft polymerization, the pre-irradiation method is preferable because an amount of homopolymer generation is smaller.

Regarding the pre-irradiation method, known methods such as a polymer radical method in which a polymer substrate is irradiated with radiation in an inert gas and a peroxide method in which a polymer substrate is irradiated with radiation in presence of oxygen can be used.

Radiation in the radiation graft polymerization means ionizing radiation such as electron beam, $\gamma$ ray, and ion beams etc., an energy of the radiation is usually 1 kGy or more, preferably 5 kGy or more, more preferably 10 kGy or more, and usually 500 kGy or less, preferably 100 kGy or less, more preferably 50 kGy or less.

A temperature condition during radiation irradiation is usually room temperature, usually 150°C or lower, preferably 50°C or lower, more preferably 30°C or lower.

When it is within the above-described range, sufficient ionic conductivity can be ensured, and deterioration of the polymer substrate can be suppressed.

When the pre-irradiation method is applied for the step of the radiation graft polymerization of the present invention, a method of contacting the polymer substrate with the starting raw material is not particularly limited. It may be immersion ofthe polymer substrate after irradiation with radiation in a solution containing the starting raw material.

Examples of a solvent used for the solution containing the starting raw material include dichloroethane, chloroform, N-methylformaldehyde, N-methylacetamide, N-methylpyrrolidone, $\gamma$-butyrolactone, n-hexane, dioxane, methanol, ethanol, 1-propanol, tert-butanol, toluene, xylene, cyclohexane, cyclohexanone, dimethylsulfoxide.

A concentration of the starting raw material in the solution is not particularly limited and can be appropriately set depending on a purpose. For example, the concentration of the starting raw material may be 10 weight% or more, preferably 30 weight% or more, more preferably 50 weight% or more, and usually 100 weight% or less, preferably 80 weight% or less, more preferably 60 weight% or less.

An immersion temperature is usually room temperature or higher, preferably 40°C or higher, more preferably 50°C or higher, and usually 120°C or lower, preferably 100°C or lower, more preferably 80°C or lower.

An immersion time is usually 0.5 hours or more, preferably 1 hour or more, more preferably 2 hours or more, and usually 100 hours or less, preferably 20 hours or less, more preferably 5 hours or less.

When it is within the above-described range, a sufficient grafting degree can be ensured, and deterioration of the polymer substrate can be suppressed.

In addition to the step of the above-described radiation graft polymerization, the production method of the resin composition in the embodiment of the present invention may comprise an additional reaction step of providing functions for various kinds of applications of the resin composition in the embodiment of the present invention.

For example, regarding the resin composition in which a spacer (E) and an ion conductive group (Im) are introduced into a polymer substrate using the radiation graft polymerization, the production method may comprise an N-alkylation step in which a nitrogen atom of the ion conductive group (Im) undergoes N-alkylation, and an ion exchange step in which an anion ($X^-$) as a counter ion is replaced with a desired anion.

For example, the N-alkylation step comprises alkylating all or part of the nitrogen atoms in the imidazole ring (imidazole derivative) structure of the introduced ion conductive group (Im). Here, a specific method, conditions, and etc. of the N-alkylation are not particularly limited, and known methods can be appropriately employed. The N-alkylation step according to the present invention is preferably a step of alkylation with an alkyl halide having 1 to 10 carbon atoms.

The alkyl halide used in the N-alkylation step can be appropriately selected depending on the purpose, and the carbon number is usually 1 or more and usually 10 or less, preferably 6 or less, more preferably 3 or less. Examples of the halogen atom of the alkyl halide include chlorine, bromine, and iodine. For example, specific examples of the alkyl halide include methyl iodide, ethyl iodide, propyl iodide, isopropyl iodide, and particularly propyl iodide.

Examples of the solvent used in the N-alkylation step include alcohols such as methanol, ethanol, and propanol, ethers such as dioxane, aromatic hydrocarbons such as toluene and xylene, aprotic polar solvents such as N,N-dimethylformamide (DMF) and dimethylsulfoxide (DMSO).

A reaction temperature is usually 5°C or higher, preferably 40°C or higher, and usually 100°C or lower, preferably 95°C or lower.

A reaction time is usually 2 hours or more, preferably 24 hours or more, and usually 72 hours or less, preferably 48 hours or less.

In the N-alkylation step according to the present invention, while a specific amount of introduction and etc.. are not particularly limited as long as at least a part of the nitrogen atoms in the imidazole ring (imidazole derivative) is alkylated, a reaction yield of the N-alkylation is usually 30% or more, preferably 50% or more, more preferably 70% or more.

In an embodiment of the present invention,
the ion exchange step comprises contacting the resin composition obtained by the radiation graft polymerization step and the N-alkylation step with a solution containing a desired anion and replacing an anion ($X^-$) as a counter ion with the desired anion.

In an embodiment of the present invention,
the resin composition that has undergone the N-alkylation step using an alkyl halide usually has a halogen ion as a counter ion to an ion conductive group (Im). Therefore, when the resin composition is used as an anion conductive electrolyte membrane, it is preferable to replace a halogen ion with a hydroxide ion as a counter ion.

In this case, as long as this ion replacement step comprises a step in which the resin composition obtained through the step of the radiation graft polymerization and the N-alkylation is brought into contact with a solution containing hydroxide ion, and specific methods, conditions, and etc.. are not particularly limited, and known methods can be appropriately employed.

In an embodiment of the present invention,
The solution containing the hydroxide ion includes the aqueous solutions such as sodium hydroxide and potassium hydroxide.

The concentration of the hydroxide ion in the solution is usually 0.1 mol/L or more, preferably 0.5 mol/L or more, and usually 5 mol/L or less, more preferably 2 mol/L or less.

The immersion temperature is usually 5°C or higher, preferably 20°C or higher, and usually 80°C or lower, preferably 60°C or lower.

The immersion time is usually 2 hours or more, preferably 16 hours or more, and usually 48 hours or less, preferably 24 hours or less. In order to complete the ion replacement step of an equilibrium reaction, it is desirable to replace the solution during immersion process.

[Electrochemical Device]

The above-described resin composition in the embodiment of the present invention can be suitably used as a material for an electrochemical device.

In particular, as a material for an electrolyte layer and/or an electrode in an electrochemical device the electrolyte layer is sandwiched between a pair of electrodes on the both side, the resin composition in the embodiment of the present invention can be suitably used. Here "a material for an electrode" may include one for forming a part of a structure related to the electrode, and it includes a binding material (a binder) for a catalyst and an active material.

In an embodiment of the present invention,
the electrochemical device of the present invention comprises an electrolyte layer and an electrode, and it may be a fuel cell, a metal-air battery, an electrolytic bath, and etc... In particular, the electrochemical device of the present invention is preferably a fuel cell or a metal-air battery. Thereby Advantage of the functions related to the high ionic conductivity and alkaline durability in the above-described resin compositionmakes it possible to solve the problems in conventional fuel cells and metal-air batteries, and to provide highly practical ones.

Hereinafter, as the electrochemical device of the present invention, a fuel cell will be mainly explained, but it is not limited thereto.

Fig. 1 shows a schematic cross sectional view illustrating a structure of an electrochemical device (a fuel cell) according to an embodiment of the present invention.

An electrochemical device 1 according to this embodiment is an anion conductive fuel cell to which a liquid fuel component is directly supplied.

Examples of the fuel component supplied to the electrochemical device 1 may include hydrogen, methanol, ammonia, hydrazines (including hydrazine hydrate, anhydrous hydrazine (hydrazine), and etc.).

As illustrated in Fig. 1, the electrochemical device 1 is configurated in a stacked structure in which a plurality of cells (unit cells) of the fuel cell that includes a membrane electrode assembly 2, a fuel side diffusion layer 8, an oxygen side diffusion layer 9, a fuel supply member 3 disposed on one side (an anode side) of the membrane electrode assembly 2, and an air supply member 4 disposed on the other side (a cathode side) of the membrane electrode assembly 2 are stacked. In Fig. 1, among the plurality of unit cells, only one cell is represented here as the component of the electrochemical device 1, and other unit cells are omitted.

The membrane electrode assembly 2 includes an electrolyte membrane 5 as the electrolyte layer, a fuel side electrode 6 made of a catalyst layer formed on one-side surface (hereinafter simply referred to as "one surface") in a

thickness direction of the electrolyte membrane 5, and an oxygen side electrode 7 made of a catalyst layer formed on the other-side surface (hereinafter simply referred to as "the other surface") in a thickness direction of the electrolyte membrane 5.

Thus, the membrane electrode assembly 2 has a structure in which the electrolyte membrane 5 sandwiched between the fuel side electrode 6 and the oxygen side electrode 7.

The electrolyte membrane 5 is not particularly limited as long as it is a layer in which an anion component (for example, the hydroxide ion ($OH^-$) or etc..) can migrate. For example, the electrolyte membrane 5 may be made from the above-described resin composition.

The fuel side electrode 6 is made of a catalyst layer comprising a cell-electrode catalyst layer composition including a binder and a catalyst.

The catalyst is not particularly limited, and examples of the catalyst include periodic table group 8 elements to 10 (VIII) elements such as platinum group elements (ruthenium (Ru), rhodium (Rh), palladium (Pd), osmium (Os), iridium (Ir), and platinum (Pt)) and iron group elements (iron (Fe), cobalt (Co), nickel (Ni)), and periodic table group 11 (IB) elements such as copper (Cu), silver (Ag), gold (Au). These catalysts can be used alone or in combination of two kinds or more.

Further the catalyst may be supported on a catalyst carrier. Examples of the catalyst carrier include porous substances such as carbon and ceramic materials.

To form the catalyst layer of the fuel side electrode 6, first, a catalyst ink (a solution containing the cell-electrode catalyst layer composition) for the fuel side electrode 6 is prepared.

Examples of preparing the catalyst ink for the fuel side electrode 6 include adding a binder for forming the electrode catalyst layer to the above-described catalyst and stirringthe mixures.

Here, as the binder for forming the electrode catalyst layer, the above-described resin composition can be used. More specifically, examples of the binder for the electrode catalyst layer includes a binder made from the above-described resin composition is shredded or freeze-pulverized and then dispersed in a solvent.

In this case, examples of the solvent may include known solvents of, lower alcohols such as methanol, ethanol, and 1-propanol, ethers such as tetrahydrofuran (THF) and dioxane, ketones such as acetone and methyl ethyl ketone, an aprotic polar solvents such as N-methyl pyrrolidone, and water. The stirring temperature at this time is, for example, 10°C to 30°C, and the stirring time is, for example, 1 to 60 minutes. These solvents can be used alone or in combination of two kinds or more.

Thereby the catalyst ink for the fuel side electrode 6 can be prepared.

Then, the prepared catalyst ink for the fuel side electrode 6 is applied onto a material serving as an electrode substrate and dried to form the catalyst layer. At this time, as the electrode substrate materials, it is preferable to use a porousmaterials, and for example, the electrolyte membrane 5 or the fuel side diffusion layer 8 may be used. In this case, the catalyst ink for the fuel side electrode 6 is applied onto one surface of the electrolyte membrane 5 or the fuel side diffusion layer 8 and is dried to form the catalyst layer.

Examples of coating method of the catalyst ink for the fuel side electrode 6 include, known application methods such as a spray, a die coater, and inkjet method, and preferably a spray method.

A trying temperature is, for example, 10°C to 40°C.

Thus, the fuel side electrode 6 made of the catalyst layer can be obtained.

As the fuel side electrode 6, the oxygen side electrode 7 is made from a catalyst layer composition comprising a binder and a catalyst.

In addition to the same catalyst as the above-described fuel side electrode 6, the catalyst of the oxygen side electrode 7 may bemade from, for example, a material in which a transition metal is supported on a composite (hereinafter, this composite will be referred to as "a carbon composite") made of a complex-forming organic compound and/or an electroconductive polymer and carbon.

Examples of the transition metal include, for example, scandium (Sc), titanium (Ti), vanadium (V), chrome (Cr), manganese (Mn), iron (Fe), cobalt (Co), nickel (Ni), copper (Cu), yttrium (Y), zirconium (Zr), niobium (Nb), molybdenum (Mo), technetium (Tc), ruthenium (Ru), rhodium (Rh), palladium (Pd), silver (Ag), lanthanum (La), hafnium (Hf), tantalum (Ta), tungsten (W), rhenium (Re), osmium (Os), iridium (Ir), platinum (Pt), and gold (Au). These transition metal can be used alone or in combination with two kinds or more.

The complex-forming organic compound is an organic compound that forms a complex with a metal atom by coordinating with the metal atom, and examples of the compounds include, pyrrole, porphyrin, tetramethoxyphenylporphyrin, dibenzotetraazaannulene, phthalocyanine, choline, chlorin, phenanthroline, salcomine, benzoimidazole, aminobenzimidazole, nicarbazin, diaminomaleonitrile, carbendazim, aminoantipyrine, or polymers of these. These complex-forming organic compound can be used alone or in combination of two kinds or more.

While there are some compounds that overlap with the above-described complex-forming organic compound, examples of the electroconductive polymer include, for example, polyaniline, polypyrrole, polythiophene, polyacetylene, polyvinylcarbazole, polytriphenylamine, polypyridine, polypyrimidine, polyquinoxaline, polyphenylquinoxaline, polyisothianaphthene, polypyridinediyl, polythienylene, polyparaphenylene, polyflurane, polyacene, polyfuran, polyazulene, polyindole, and polydiaminoanthraquinone. These electroconductive polymer can be used alone or in combination of two kinds or more.

In order to form the catalyst layer of the oxygen side electrode 7, first, a catalyst ink (a solution including the cell-electrode catalyst layer composition) for the oxygen side electrode 7 is prepared in the same manner as in the case of the fuel side electrode 6 described above.

The catalyst ink for the oxygen side electrode 7 is prepared, for example, in the same manner as in the case of the catalyst ink for the above-described fuel side electrode 6.

Futher the catalyst ink for the oxygen side electrode 7 may be prepared, for example, by forming a carbon composite and then causing it to support a transition metal.

In the same manner as in the case of preparing the catalyst ink for the fuel side electrode 6, in order to prepare the catalyst ink for the oxygen side electrode 7, adding the above-described binder to the above-described catalyst and then stiring the mixture.

Thereby the catalyst ink for the oxygen side electrode 7 can be prepared.

Then, in the same manner as in the catalyst ink for the fuel side electrode 6, the prepared catalyst ink for the oxygen side electrode 7 is coated on a material (for example, the other surface of the electrolyte membrane 5 or one surface of the oxygen side diffusion layer 9) serving as an electrode substrate and is dried to form a catalyst layer.

Thereby, the oxygen side electrode 7 made of the catalyst layer can be obtained.

Then, to manufacture the membrane electrode assembly 2, the fuel side electrode 6 and the oxygen side electrode 7 are joined to the electrolyte membrane 5. At this time, the fuel side diffusion layer 8 and the oxygen side diffusion layer 9, which will be described later, may be joined together.

A method for joining the fuel side electrode 6 and the oxygen side electrode 7 to the electrolyte membrane 5 is not particularly limited.

Example of the method include pressurizing the electrolyte membrane 5 on which the fuel side electrode 6 and the oxygen side electrode 7 are formed from both sides in a thickness direction of the electrolyte membrane 5. In addition to pressurize the electrolyte membrane 5, for example, a hydraulic pressing machine or etc. is used. In this case, heating may be performed simultaneously with pressurization (hot press). By hot pressing, the fuel side electrode 6 and the oxygen side electrode 7 can be joined to the electrolyte membrane 5 at a lower pressure.

Another example includes joining the one in which the fuel side electrode 6 formed on the fuel side diffusion layer 8, the electrolyte membrane 5, and the oxygen side electrode 7 formed on the oxygen side diffusion layer 9 are stacked inside the cell in this order, by using a fixture, or etc..

Thereby the membrane electrode assembly 2 is manufactured.

The fuel side diffusion layer 8 supplies fuel to the fuel side electrode 6 and has functions of current collection of electrons generated in a chemical reaction, protection of the electrolyte membrane 5, and etc.. The fuel side diffusion layer 8 preferably has gas permeability and ionic conductivity, as well as durability and mechanical strength, and examples of the fuel side diffusion layer 8 include, carbon paper or carbon cloth, and a gas permeability material including carbon paper or carbon cloth with fluorination treatment in case necessary.

The fuel side diffusion layer 8 is a commercially available product and those include, B-1 Carbon Cloth Type A No wet proofing (manufactured by BASF), ELAT(registered trademark: manufactured by BASF), SIGRACET(registered trademark: manufactured by SGL), and etc..

The oxygen side diffusion layer 9 supplies air (oxygen) to the oxygen side electrode 7, and has functions related to current collection of electrons generated in the chemical reaction, protection of the electrolyte membrane 5, discharge of generated water, and etc.. Examples of the oxygen side diffusion layer 9 include, the gas permeability material exemplified as the fuel side diffusion layer 8.

As described above, the fuel side diffusion layer 8 and the oxygen side diffusion layer 9 may be equipped with the fuel side electrode 6 and the oxygen side electrode 7 formed on their both sides of the surfaces and have a function as electrodes, and may be different ones from the fuel side electrode 6 and the oxygen side electrode 7 equipped on the electrolyte membrane 5 to have a function related to protection of the electrodes.

When the fuel side diffusion layer 8 and the oxygen side diffusion layer 9 have the protection function of the electrodes, examples of the arrangement of the fuel side diffusion layer 8 and the oxygen side diffusion layer 9 include laminating the fuel side diffusion layer 8 on the one surface of the electrolyte membrane 5 so as to cover the fuel side electrode 6 and laminating the oxygen side diffusion layer 9 on the other surface of the electrolyte membrane 5 so as to cover the oxygen side electrode 7, respectively.

In this case, means for lamination of the fuel side diffusion layer 8 and the oxygen side diffusion layer 9 on the electrolyte membrane 5 is not particularly limited. Examples of the means for lamination include fixing with a gasket or etc. and pressurizing from the outside (including hot press).

The fuel supply member 3 is made of an electrically conductive member with gas-impermeability and supplies a liquid fuel to the fuel side electrode 6. The fuel supply member 3 has grooves formed to have a shape depressed from

the surface of it, for example, a meander shape, or etc.. Then, examples of the fuel supply member 3 include one having a grooved surface opposed to and brought into contact with the fuel side electrode 6. Thereby between one surface of the fuel side electrode 6 and the other surface (the surface where the groove is formed) of the fuel supply member 3, a fuel supply passage 10 for bringing a fuel component into contact with the entire fuel side electrode 6 is formed.

The fuel supply passage 10 has a fuel supply port 11 from which the fuel component will be supplied to the fuel supply member 3 formed on one-end side (upper side of the paper in Fig. 1) and a fuel discharge port 12 to discharge the fuel component formed on the other-end side (lower side of the paper in Fig. 1) of it.

The air supply member 4 is made of the electrically conductive member with gas-impermeability and supplies air (oxygen) to the oxygen side electrode 7. The air supply member 4 has grooves of concave shape with depressed surface, for example, a meander shape, or etc.. Then, examples of the air supply member 4 include one that has a grooved surface opposed to and is brought into contact with the oxygen side electrode 7. Thereby between the surface of the oxygen side electrode 7 and the other surface (the surface where the groove is formed) of the air supply member 4, an air supply passage 13 for air (oxygen) to keep good contact with throughout the entire oxygen side electrode 7 is formed.

The air supply passage 13 has an air supply port 14 to supply air (oxygen) into the air supply member 4 formed on one-end side (upper side of the paper in Fig. 1) of it and an air discharge port 15 to discharge the air (oxygen) from the air supply member 4 formed on the other-end side (lower side of the paper in Fig. 1) of it.

An outline of an operation of the above-described electrochemical device 1 will bedescribed.

In the electrochemical device 1, a fuel component is supplied to the fuel side electrode 6 from the fuel supply port 11. On the other hand, air (oxygen) is supplied to the oxygen side electrode 7 from the air supply port 14.

On the anode side, a liquid fuel passes through the fuel supply passage 10 in contact with the fuel side electrode 6. On the other hand, on the cathode side, air (oxygen) passes through the air supply passage 13 in contact with the oxygen side electrode 7.

Thereby, an electrochemical reaction occurs at each electrode (the fuel side electrode 6 and the oxygen side electrode 7), and an electromotive force is generated.

[EXAMPLES]

The present invention will be described with reference to examples and comparative examples hereinafter, however the present invention is not limited by the following examples.

[RESIN COMPOSITION]

(Example 1-1)

An EFTE membrane with a film thickness of 25 $\mu$m (manufactured by DuPont Co.) was irradiated with $\gamma$ rays of 50 kGy under argon atmosphere at room temperature, and then immersed in a degassed chloromethylstyrene (CMS)/xylene solution (CMS:xylene=1:1) in a constant temperature bath of 60°C for 2 hours to perform graft polymerization of CMS with a ETFE main chain (a grafting degree of 77%).

The obtained graft membrane was immersed in an ethanol solution of 1,2,4,5-tetramethylimidazole (a concentration of 1M) and reacted in a constant temperature bath of 60°C for 24 hours. The obtained graft membrane was washed with acetone and then dried in vacuum to obtain the resin composition having a chloride ion as a counter anion with a reaction yield of N-alkylation of 70%. A part of the obtained resin composition was freeze-pulverized and used as a binder material for forming the electrode catalyst layer.

The obtained resin composition was immersed in a 1M-potassium hydroxide aqueous solution at room temperature for 16 hours to replace the counter ion with the hydroxide ion, and then by repeating washing twice deionized water, from which carbonic acid was removed by nitrogen bubbling, and further immersing it twice in the 1M-potassium hydroxide aqueous solution for 30 minutes, the resin composition (the anion conductive electrolyte membrane) having the hydroxide ion as a counter ion was obtained.

The structure of the resin composition in Example 1-1 is represented by the following formula (6).

[Chemical structure 10]

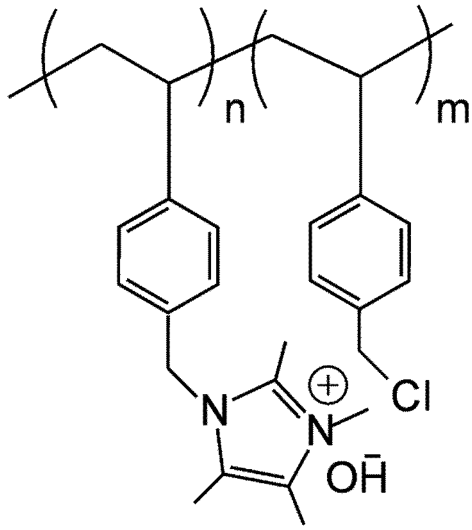

(6)

wherein, n and m represent the mole ratio)
In Example 1-1, in the formula (6), n:m = 7:3.

(Example 1-2)

An EFTE membrane with a film thickness of 25 μm (manufactured by DuPont Co.) was irradiated with γ rays of 50 kGy under argon atmosphere at room temperature, and then immersed in a degassed 2-(4-ethenylphenyl)-1,4,5-trimethyl-1H-imidazole (St-TMIm)/1,4-dioxane solution (St-TMIm:dioxane=1:1) in a constant temperature bath of 60°C for 5 hours to perform graft polymerization of St-TMIm with the ETFE main chain (a grafting degree of 55%).
The obtained grapht membrane was immersed in a dioxane solution of propyl iodide (a concentration of 1M) and reacted in a constant temperature bath of 90°C for 24 hours. The obtained graft membrane was washed with acetone and then immersed in a (50/50 vol%) mixed solution of a 1M-hydrochloric acid aqueous solution and 1,4-dioxane to convert the counter ion to a chloride ion, and then washed with deionized water and dried in vacuum to obtain the resin composition having the chloride ion as a counter anion with the reaction yield of N-alkylation of 100%.
By the operation as in Example 1-1, the obtained resin composition was converted to the anion conductive electrolyte membrane having the hydroxide ion as a counter ion.
The structure of the resin composition in Example 1-2 is represented by the following formula (7).

[Chemical structure 11]

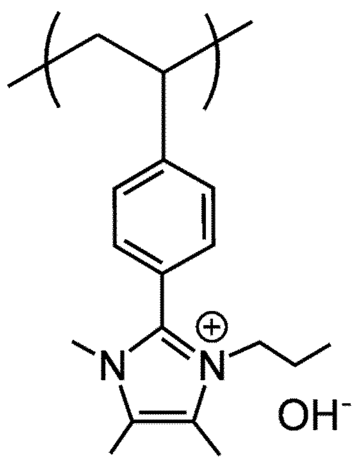

(7)

(Comparative Example 1-1)

An EFTE membrane with a film thickness of 25 μm (manufactured by DuPont Co.) was irradiated with γ rays of 50 kGy under argon atmosphere at room temperature, and then immersed in the degassed chloromethylstyrene (CMS)/xylene solution (CMS:xylene=1:1) in a constant temperature bath of 60°C for 2 hours to perform graft polymerization of CMS with the ETFE main chain (a grafting degree of 70%).

The obtained graft membrane was immersed in a trimethylamine aqueous solution (a concentration of 30 wt%) and reacted at room temperature for 16 hours. The obtained graft membrane was washed with deionized water and then immersed in 1M-hydrochloric acid for 24 hours, and then immersed in deionized water and washed for 2 hours to obtain the resin composition having the chloride ion as a counter ion with the reaction yield of quaternization of 100%. A part of the obtained resin composition was freeze-pulverized and used as a binder material for forming the electrode catalyst layer.

By the same operation as in Example 1-1, the obtained resin composition was converted to the anion conductive electrolyte membrane having the hydroxide ion as a counter ion.

The structure of the resin composition in Comparative Example 1-1 is represented by the following formula (8).

[Chemical structure 12]

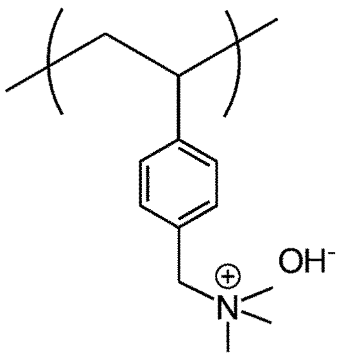

(8)

(Comparative Example 1-2)

An EFTE membrane with a film thickness of 25 μm (manufactured by DuPont Co.) was irradiated with γ rays of 50 kGy under argon atmosphere at room temperature, and then immersed in the degassed chloromethylstyrene (CMS)/xylene solution (CMS:xylene=1:1) for 2 hours in a constant temperature bath of 60°C to perform graft polymerization of CMS with the ETFE main chain (a grafting degree of 70%).

The obtained graft membrane was immersed in an ethanol solution of 1,2-dimethyl imidazole (a concentration of 2M) and reacted in a constant temperature bath of 60°C for 4 hours. The obtained graft membrane was washed with acetone and then dried in vacuum to obtain the resin composition having the chloride ion as a counter anion with the reaction yield of N-alkylation of 57%.

By the same operation as in Example 1-1, the obtained resin composition was converted to the anion conductive electrolyte membrane having the hydroxide ion as a counter ion.

The structure of the resin composition in Comparative Example 1-2 is represented by the following formula (9).

[Chemical structure 13]

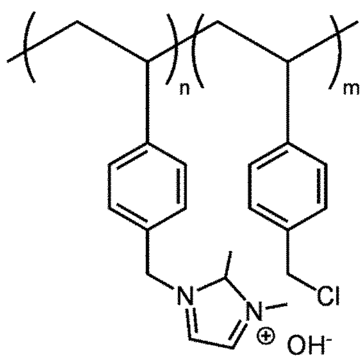

(9)

wherein, n and m represent the mole ratio
In Comparative Example 1-2, in the formula (9), n:m = 6:4.

(Comparative Example 1-3)

An EFTE membrane with a film thickness of 25 μm (manufactured by DuPont Co.) was irradiated with γ rays of 50 kGy under argon atmosphere at room temperature, and then immersed in a degassed 2-(4-ethenylphenyl)-1-methyl-1H-imidazole (St-Im)/1,4-dioxane solution (St-Im:dioxane=1:1) in a constant temperature bath of 60°C for 5 hours to perform graft polymerization of St-Im with the ETFE main chain (a grafting degree of 47%).
The obtained graft membrane was immersed in a dioxane solution of propyl iodide (a concentration of 1M) and reacted in a constant temperature bath of 90°C for 24 hours. The obtained graft membrane was washed with acetone and then immersed in the
(50/50 vol%)mixed solution of the 1M-hydrochloric acid aqueous solution and 1,4-dioxane to convert the counter ion to a chloride ion, and then washed with deionized water and dried in vacuum to obtain the resin composition having the chloride ion as a counter anion with a reaction yield of N-alkylation of 100%.
By the same operation as in Example 1-1, the obtained resin composition was converted to the anion conductive electrolyte membrane having the hydroxide ion as a counter ion.
The structure of the resin composition in Comparative Example 1-3 is irepresented by the following formula (10).

[Chemical structure 14]

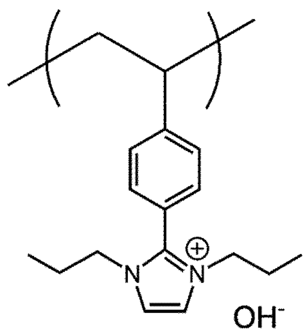

**(10)**

Regarding the anion conductive electrolyte membranes produced in Examples 1-1 and 1-2 and Comparative Examples 1-1 to 1-3, the values related to five evaluation criteria (the grafting degree, an ion exchange capacity (IEC), a water uptake, an ionic conductivity, an alkaline durability)were measured, and performances of each anion conductive electrolyte membrane were evaluated.
It is principally desirable to perform evaluation of these anion conductive electrolyte membrane with all hydroxide ions as a counter ion. However, hydroxide ions as a counter ion quickly reacts with carbon dioxide in the atmosphere and turns into bicarbonate ions. Therefore, in order to obtain stable measurement values, decarbonated deionized water by nitrogen bubbling was used for the washing after immersion in a basic solution and for the measurement of the ionic conductivity.
Each measurement values were determined as follows.

(1) Grafting degree (%)

When a polymer substrate is regarded as a main chain portion and a part subject to graft polymerization with the starting raw material is regarded as a graft chain portion, a weight ratio of the graft chain portion to the main chain portion is represented by a grafting degree of the following formula ($X_{dg}$[weight%]).

$$X_{dg} = 100\,(W_2 - W_1)/W_1$$

$W_1$: weight in dry state before graft (g)
$W_2$: weight in dry state after graft (g)

(2) Ion Exchange Capacity (mmol/g)

The ion exchange capacity (Ion Exchange Capacity, IEC) of the anion conductive electrolyte membrane is represented by the following formula.

$$IEC = [n\ (basic\ group)_{obs}]/W_3\ (mM/g)$$

[n (basic group)$_{obs}$]: basic group amount of anion conductive electrolyte membrane (mM)
$W_3$: dry weight of anion conductive electrolyte membrane (g)

The measurement of [n (basic group)$_{obs}$] is performed in the following procedure.

After the anion conductive electrolyte membrane as hydroxide (hereinafter referred to as "OH type") is immersed in 0.1M-hydrochloric acid solution, whose capacity is exactly measured, at room temperature for 12 hours, and converted completely into chloride (hereinafter referred to as "Cl type"), the basic group concentration of the anion conductive electrolyte membrane is determined by back-titrating the concentration of the remaining hydrochloric acid solution with 0.1M-NaOH.

(3) Water content (%)

After the anion conductive electrolyte membrane of Cl type or OH type preserved in water at room temperature is taken out, and water on its surface is lightly wiped off, the weight ($W_5$ (g)) of it is measured. After vacuum drying the membrane at a temperature of 40°C for 16 hours, the dry weight $W_4$ (g) of the anion conductive electrolyte membrane is determined by weight measurement to calculate the water content from $W_5$ and $W_4$ by the following formula.

$$water\ content = 100\ (W_5 - W_4)\ /W_4$$

(4) Ionic Conductivity (S/cm)

For a measurement by the alternating current method, a membrane resistance measurement cell made of a platinum electrode and LCR meter 3522 manufactured by HIOKI Co. were used. The anion conductive electrolyte membrane in a saturated and swelling state in water at room temperature was taken out and held between the platinum electrodes to measure membrane resistance (Rm) by impedance after being immersed in deionized water at 60°C for two minutes. Then, the ionic conductivity (standard) of the anion conductive electrolyte membrane was calculated by using the following formula.

$$\kappa = 1/Rm \cdot d/S$$

$\kappa$: ionic conductivity of anion conductive electrolyte membrane (S/cm)
d: thickness of anion conductive electrolyte membrane (cm)
S: conducting area of anion conductive electrolyte membrane ($cm^2$)

The ionic conductivity of the resin composition (the anion conductive electrolyte membrane) in the embodiment of the present invention is usually 40 mS/cm or more, preferably 50 mS/cm or more. The resin composition having the ionic conductivity within this range can be sufficiently practical material for an anion conductive electrolyte membrane.

(5) Alkaline Durability (maintenance factor (%) of the ionic conductivity after immersion in alkaline solution for 200 hours)

Samples of each anion conductive electrolyte membrane was immersed in 1M-KOH heated to 80°C for 200 hours, and then the ionic conductivity of the anion conductive electrolyte membrane after immersion was determined. Then, the maintenance factor (residual rate) of the ionic conductivity was calculated by using the following formula to evaluate the alkaline durability.

$$\text{maintenance factor} = \text{ionic conductivity (after immersion for 200 hours)/ionic conductivity (as prepared)} \times 100$$

The maintenance factor of the ionic conductivity related to the alkaline durability of the resin composition (the anion conductive electrolyte membrane) in the embodiment of the present invention is usually 60% or more, preferably 70% or more. The resin composition having the maintenance factor of the ionic conductivity within this range, in particular, can be sufficiently practical for an anion conductive electrolyte membrane.

Table 1 shows the results of the measurements of the grafting degree, IEC, the water content, the ionic conductivity, the maintenance factor of the ionic conductivity after immersion in 1M-KOH heated to 80°C for 200 hours of the anion conductive electrolyte membranes produced in Examples 1-1 and 1-2, and Comparative Examples 1-1 to 1-3.

| | GRAFT RATE | IEC | WATER CONTENT | ELECTRIC CONDUCTIVITY | MAINTENANCE FACTOR OF ELECTRIC CONDUCTIVITY AFTER 200 HOURS |
|---|---|---|---|---|---|
| | % | meq/g | % | mS/cm | % |
| EXAMPLE 1-1 | 77 | 1.73 | 103 | 152 | 95 |
| EXAMPLE 1-2 | 55 | 1.52 | 49 | 43 | 74 |
| COMPARATIVE EXAMPLE 1-1 | 70 | 2.16 | 119 | 89 | (GELLING) |
| COMPARATIVE EXAMPLE 1-2 | 52 | 1.17 | 53 | 102 | 1 |
| COMPARATIVE EXAMPLE 1-3 | 47 | 1.12 | 38 | 100 | 23 |

The results in Table 1, shows that all of the resin composition (the anion conductive electrolyte membrane) produced in Examples 1-1 and 1-2 had good ionic conductivity, water-containing property, and alkaline durability.

It is especially noted that the membrane sample of Comparative Example 1-1 of which resin composition is prepared using a trimethyammonium salt as the ion conductive group gelled after 48 hours of immersion. Futher the result of the sample of Comparative Example 1-2 of which resin composition prepared without protecting the 4th and 5th positions had the maintenance factor of 1%, the Example 1-1 in which resin composition with protection of the 4th and 5th positions in the ion conductive group (Im) by the methyl group, which is the resin composition in accordance with the present invention, had significantly higher maintenance factor of 95%. Example 1-2, had about three times as high maintenance factor23% to 74% as that of comparative Example 1-3.

Based on the results of Table 1, it is indicated that the resin compositions in the embodiment of the present invention had functions related to the ionic conductivity and the alkaline durability and thus exhibited sufficiently high enough performances for practical use for the anion conductive electrolyte membrane.

[ELECTROCHEMICAL DEVICE]

As an example and a comparative example related to the electrochemical device in the embodiment of the present invention, a membrane electrode assembly and a fuel cell were manufactured.

(Example 2)

[1] Preparation of catalyst ink for fuel side electrode

A paste where a platinum-ruthenium-carbon catalyst (a ruthenium amount 30 wt%, a platinum amount 23 wt%) and carbon black (VULCAN (registered trademark) XC-72R) were dispersed in distilled water and the resin composition of Example 1-1 dispersed in isopropanol were mixed so that a mixing ratio of platinum:carbon:binder becomes 1.00:2.50:1.04, and then it was dispersed by using ultrasonic wave at a temperature of 10°C for 60 minutes to prepare a catalyst ink for the fuel side electrode.

[2] Preparation of catalyst ink for oxygen side electrode

A paste where a platinum-carbon catalyst (a platinum amount 46 wt%) and carbon black (VULCAN (registered trademark) XC-72R) were dispersed in distilled water and the resin composition of Example 1-1 dispersed in isopropanol were mixed so that a mixing ratio of platinum:carbon:binder becomes 1.00:1.20:0.55, and then the resulting mixture was dispersed by using ultrasonic wave for 60 minutes at a temperature of 10°C to prepare a catalyst ink for the oxygen side electrode.

[3] Application and drying of each catalyst ink

The catalyst ink for the fuel side electrode and that for the oxygen side electrode were coated respectively to a gas diffusion layer (SIGRACET (registered trademark) 25BC) by a spray method. Subsequently, by drying at a temperature of 25°C, the fuel side electrode having a catalytic area of 5 $cm^2$ and a thickness of 150 $\mu$m and the oxygen side electrode having a catalytic area of 5 $cm^2$ and a thickness of 150 $\mu$m were formed.

Here, the gas diffusion layers correspond to the above-described fuel side diffusion layer 8 and oxygen side diffusion layer 9, and the fuel side electrode and the oxygen side electrode in this example are formed on the fuel side diffusion layer 8 and the oxygen side diffusion layer 9 and become ones that are integrated.

[4] Connection of fuel side electrode, oxygen side electrode, and electrolyte membrane (manufacturing of membrane electrode assembly)

The manufactured fuel side electrode and oxygen side electrode, and the resin composition (the anion conductive electrolyte membrane) of Example 1-1 were each immersed in a 1M-KOH aqueous solution for 1 hour using different containers, and then excess KOH aqueous solution on their surface was wiped off, and then the fuel side electrode, the electrolyte membrane (the anion conductive electrolyte membrane), and the oxygen side electrode were stacked on the fuel cell in this order to connect them by tightening assembly bolts of the fuel cell to a torque of 8 Nm.

[5] Manufacturing of fuel cell

The fuel supply member and the air supply member were assembled to the obtained membrane electrode assembly to form a single cell unit fuel cell having the structure illustrated in Fig. 1.

(Comparative Example 2)

A membrane electrode assembly and a fuel cell were obtained by the same procedure as in Example 2, except that instead of using the resin composition of Example 1-1, the resin composition of Comparative Example 1-1 was used in the preparation of the catalyst ink for the fuel side electrode and the catalyst ink for the oxygen side electrode.

An evaluation of the output power and the durability was carried out for the single cell unit fuel cells obtained in Example 2 and Comparative Example 2.

(1) Fuel cell output power test

An output power test was performed for the single cell unit fuel cells obtained in Example 2 and Comparative Example 2.

The fuel-cell cell temperatures were set at 60°C, and in Example 2, hydrogen gas at 50°C was supplied to the anode side at the rate of 500 ml/min, and oxygen at 51°C was supplied to the cathode side at the rate of 500 ml/min. to generate electricity. On the other hand, in Comparative Example 2, hydrogen gas at 58°C was supplied to the anode side at the rate of 500 ml/min., and oxygen at 59°C was supplied to the cathode side at the rate of 500 ml/min. to generate electricity.

The voltage was measured when the current density was gradually increased from 0 mA/$cm^2$, and the output power density at each current value was calculated from the obtained values.

Fig. 2 shows the measurement results obtained in the performance test. Fig. 2(A) shows the relationship between current density-and cell voltage, and Fig. 2(B) shows the relationship between current density-output power density.

As illustrated in Fig. 2, while in the fuel cell of Comparative Example 2 in which the resin composition of Comparative Example 1-1 was used, the maximum output power density was 172 mW/$cm^2$, in the fuel cell of Example 2 in which the resin composition of Example 1-1 was used, the maximum output power density was 804 mW/$cm^2$.

Therefore, it can be seen that power generation performance of the fuel cell of Example 2 in which the resin

composition of Example 1-1 was used as a material for the electrolyte layer (the electrolyte membrane) and the electrode in the electrochemical device (the fuel cell) was about 5 times higher than that of the fuel cell of Comparative Example 2 in which the resin composition of Comparative Example 1-1 was used as a material for the electrolyte layer and the electrode.

It was found that as in Example 2, using the resin composition in the embodiment of the present invention for both the electrolyte layer (the electrolyte membrane) and the binder for forming the electrode catalyst layer to have the same compositions for the both materials the electrolyte membrane and the binder for forming the electrode catalyst layer was important to improve the power generation performance of the electrochemical device (the fuel cell) from the viewpoint of compatibility and etc..

(2) Fuel cell durability test

A durability test was performed using the single cell unit fuel cell obtained in Example 2 and Comparative Example 2.

The fuel-cell cell temperatures were set at 60°C, and in Example 2, hydrogen gas at 50°C was supplied to the anode side at the rate of 100 ml/min., and oxygen at 51°C was supplied to the cathode side at the rate of 100 ml/min. to generate electricity, and the voltage at the fixed current density of 50 $mA/cm^2$ was measured to calculate the voltage drop rate. On the other hand, in Comparative Example 2, hydrogen gas at 58°C was supplied to the anode side at the rate of 100 ml/min., and oxygen at 59°C was supplied to the cathode side at the rate of 100 ml/min. to generate electricity, and the voltage at the fixed current density of 50 $mA/cm^2$ was measured to calculate the voltage drop rate.

Fig. 3 shows the measurement results of the durability test. Fig. 3 shows a time dependency in voltage (a graph of evaluation time-voltage) at a constant current value.

As illustrated in Fig. 3, it was indicated that while in the fuel cell of Comparative Example 2, a cell voltage decreased as evaluation time went, in the fuel cell of Example 2, the cell voltage was maintained at the 95% of initial voltage even after 440 hours.

The above-described embodiment show only one example of the resin composition, the resin composition production method, and the electrochemical device. The resin composition, the resin composition production method, and the electrochemical device according to the present invention are not limited to the above-described embodiment. Various modifications of the resin composition, the resin composition production method, and the electrochemical device according to the above-described embodiment may bedone without departing from the scope of the invention stated in the claim.

While in the above-described embodiments, as the resin composition and the resin composition production method of the present invention, the applications as a material for the electrolyte layer (the electrolyte membrane) and the electrode (the binder for forming the electrode catalyst layer) in the electrochemical device and the production method for the material were mainly described, it is not limited thereto. For example, the resin composition and the resin composition production method in the present invention can be utilized as materials and production methods for the materials in various fields by taking advantage of their high ionic conductivity and high alkaline durability. For example, the resin composition in the present invention may be utilized in an ion exchange membrane, a reverse osmosis membrane, and etc..

While, in the above-described embodiment, the fuel cell was mainly described as the electrochemical device of the present invention, it is not limited thereto. For example, The electrochemical device of the present invention can be applied for other electrochemical devices such as a metal-air battery and a electrolytic bath in which the resin composition having high ionic conductivity and alkaline durability are used as materials for the electrolyte layer (the electrolyte membrane) and the electrode (including the binding material for the catalyst and the active material). In the metal-air battery, the fuel side electrode 6 in the electrochemical device indicated in the embodiment is replaced with an active material such as zinc, aluminum, magnesium, or lithium.

REFERENCE SIGNS LIST

1 Electrochemical device
2 Membrane electrode assembly
3 Fuel supply member
4 Air supply member
5 Electrolyte membrane (electrolyte layer)
6 Fuel side electrode
7 Oxygen side electrode

8 Fuel side diffusion layer
9 Oxygen side diffusion layer
10 Fuel supply passage
11 Fuel supply port
12 Fuel discharge port
13 Air supply passage
14 Air supply port
15 Air discharge port

**Claims**

**1.** A resin composition comprising one or more first repeat unit represented by formula (1) below,

[Chemical structure 1]

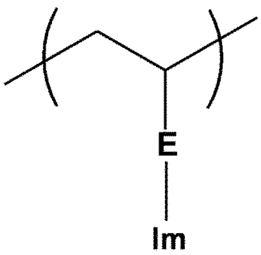

(1)

Im : 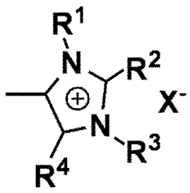 or 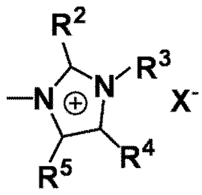 or 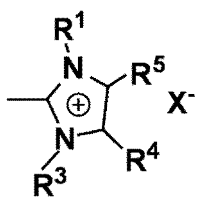

wherein E is a spacer selected from a benzene ring, a benzene derivative of which at least one hydrogen atom in the benzene ring is substituted with hydrocarbon group having 1 to 6 carbon atoms, or a carbon chain which has 2 or more carbon atoms and optionally includes a heteroatom, Im is selected from the ion conductive group consisting of an imidazole ring, each of $R^1$ to $R^5$ is independently selected from a carbon chain having 1 to 10 carbon atoms including hydrogen, halogen or a heteroatom, and X represents an anion).

**2.** The resin composition according to claim 1, wherein the resin composition further comprises one or more second repeat unit represented by formula (2) below,

[Chemical structure 2]

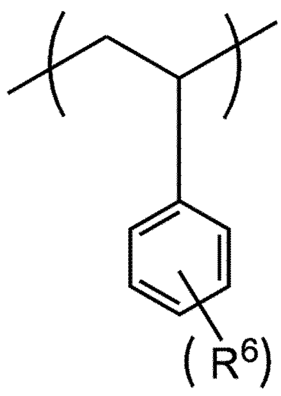

(2)

wherein, $R^6$ is selected from a carbon chain which has 1 to 10 carbon atoms and includes hydrogen, halogen or the heteroatom, ***l*** represents an integer from 0 to 5).

**3.** The resin composition according to claim 1 or 2, wherein
the repeat unit represented by formula (1) of which imidazole ring structure of Im is replaced with that in a repeat unit represented by formula (3) below,

[Chemical structure 3]

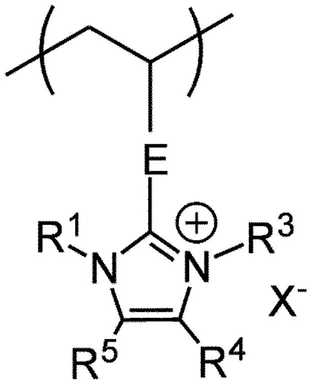

**(3)**

wherein E is a spacer selected from a benzene ring, a benzene derivative of which at least one hydrogen atom in the benzene ring is substituted with hydrocarbon group having 1 to 6 carbon atoms, or a carbon chain having 2 or more carbon atoms and optionally including a heteroatom, at least one of $R^1$ or $R^3$ has 2 or more carbon atoms, each of $R^1$, $R^3$, $R^4$ and $R^5$ independently is selected from a carbon chain which has 1 to 10 carbon atoms and includes hydrogen, halogen or a heteroatom, and X represents an anion).

**4.** The resin composition according to any one of claims 1 to 3, wherein
the ionic conductivity is 40 mS/cm or more, and the maintenance factor of the ionic conductivity is 70% or more after immersion in 1M-potassium hydroxide aqueous solution heated to 80°C for 200 hours.

**5.** A production method of a resin composition comprising comprising one or more repeat unit represented by the following formula (1), comprising the step of introducing a spacer (E) and/or an ion conductive group (Im) of the following formula (1) by the radiation graft polymerization,

[Chemical structure 4]

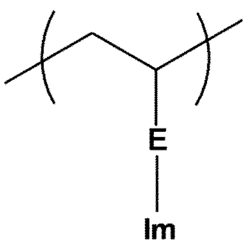

**(1)**

**Im :** 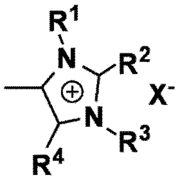 **or** 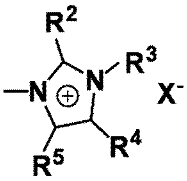 **or** 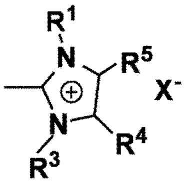

wherein, E is a spacer selected from a benzene ring, a benzene derivative of which at least one hydrogen atom in the benzene ring is substituted with a hydrocarbon group having 1 to 6 carbon atoms, or a carbon chain which has 2 or more carbon atoms and optionally includes a heteroatom, Im is selected from the ion conductive group consisting

of an imidazole ring, each of $R^1$ to $R^5$ is independently selected from a carbon chain which has 1 to 10 carbon atoms and includes hydrogen, halogen or a heteroatom, and X represents an anion).

**6.** An electrochemical device comprising:

an electrolyte layer, and
a pair of electrodes between which the electrolyte layer is sandwiched and which are arranged at a position facing the electrolyte layer, wherein
the electrolyte layer and/or the electrode comprises the resin composition according to any one of claims 1 to 4.

**7.** The electrochemical device according to claim 6, wherein
the electrochemical device is a fuel cell or a metal-air battery.

FIG. 1

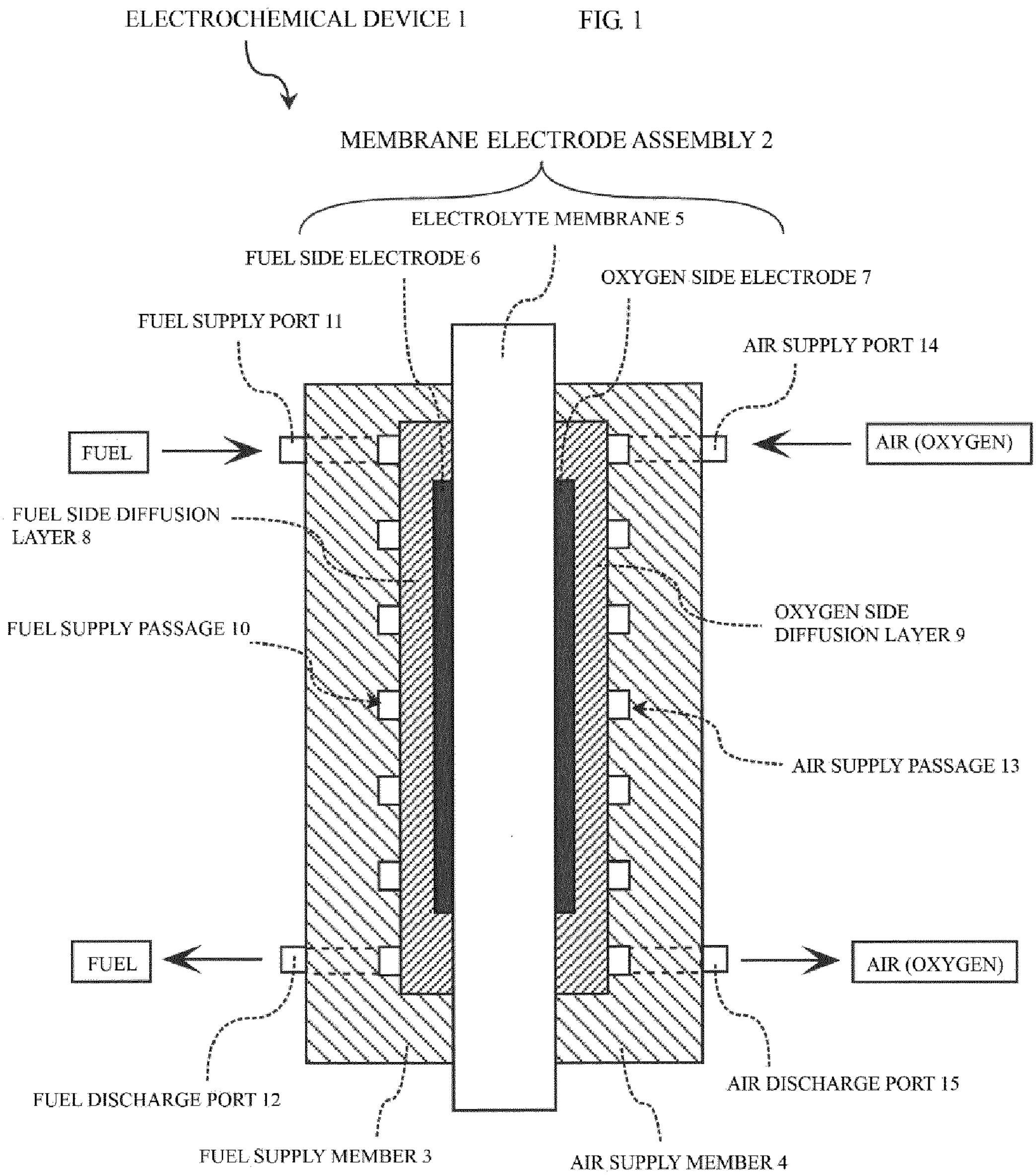
ELECTROCHEMICAL DEVICE 1
MEMBRANE ELECTRODE ASSEMBLY 2
ELECTROLYTE MEMBRANE 5
FUEL SIDE ELECTRODE 6
OXYGEN SIDE ELECTRODE 7
FUEL SUPPLY PORT 11
AIR SUPPLY PORT 14
FUEL
AIR (OXYGEN)
FUEL SIDE DIFFUSION LAYER 8
OXYGEN SIDE DIFFUSION LAYER 9
FUEL SUPPLY PASSAGE 10
AIR SUPPLY PASSAGE 13
FUEL
AIR (OXYGEN)
FUEL DISCHARGE PORT 12
AIR DISCHARGE PORT 15
FUEL SUPPLY MEMBER 3
AIR SUPPLY MEMBER 4

(A) FIG. 2

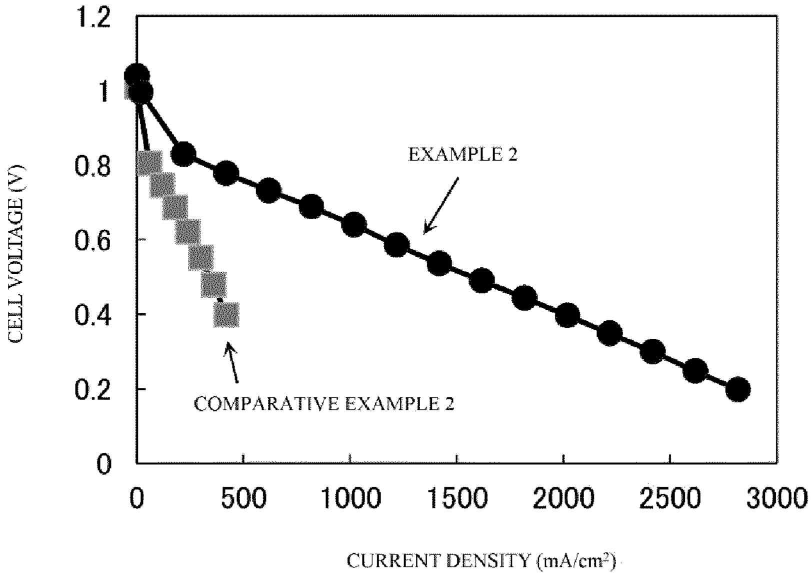

1.2
1
0.8
0.6
0.4
0.2
0
CELL VOLTAGE (V)
EXAMPLE 2
COMPARATIVE EXAMPLE 2
0
500
1000
1500
2000
2500
3000
CURRENT DENSITY (mA/cm²)


(B)

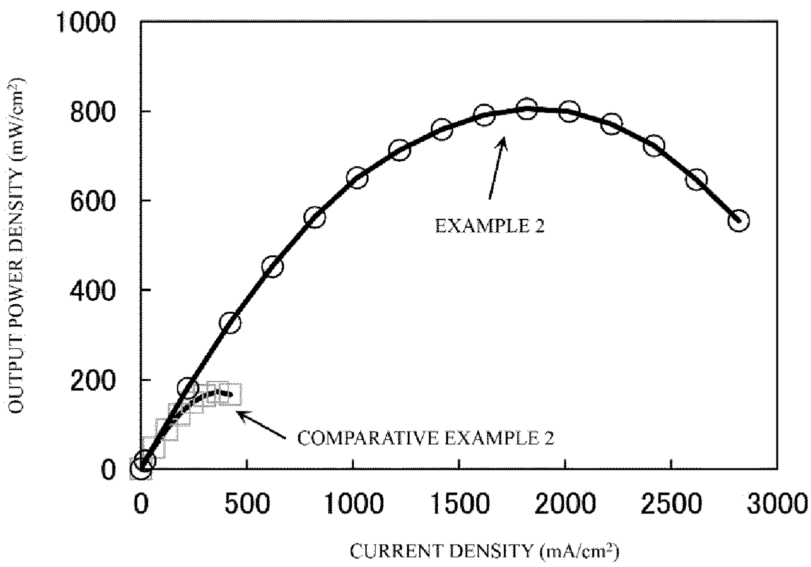

1000
800
600
400
200
0
OUTPUT POWER DENSITY (mW/cm²)
EXAMPLE 2
COMPARATIVE EXAMPLE 2
0
500
1000
1500
2000
2500
3000
CURRENT DENSITY (mA/cm²)

FIG. 3

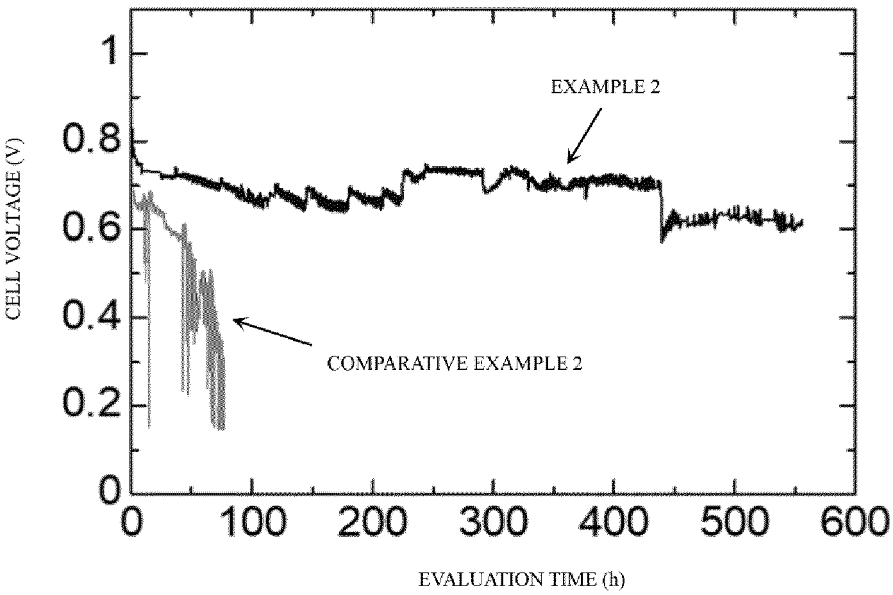
CELL VOLTAGE (V)
1
0.8
0.6
0.4
0.2
0
EXAMPLE 2
COMPARATIVE EXAMPLE 2
0
100
200
300
400
500
600
EVALUATION TIME (h)

| INTERNATIONAL SEARCH REPORT | International application No. PCT/JP2022/011700 |
|---|---|

**A. CLASSIFICATION OF SUBJECT MATTER**

***H01M 12/06***(2006.01)i; ***C08L 101/02***(2006.01)i; ***C08J 5/22***(2006.01)i; ***H01M 4/62***(2006.01)i; ***H01M 4/86***(2006.01)i; ***H01B 1/06***(2006.01)i; ***H01M 8/10***(2016.01)i; ***H01M 8/102***(2016.01)i; ***H01M 8/1088***(2016.01)i

FI: C08L101/02; H01M8/10 101; H01M8/102; H01M8/1088; H01M4/86 B; H01M12/06 F; H01M4/62 C; H01B1/06 A; C08J5/22 104; C08J5/22 CET

According to International Patent Classification (IPC) or to both national classification and IPC

**B. FIELDS SEARCHED**

Minimum documentation searched (classification system followed by classification symbols)

H01M12/06; C08L101/02; C08J5/22; H01M4/62; H01M4/86; H01B1/06; H01M8/10; H01M8/102; H01M8/1088

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2009-256654 A (SUMITOMO CHEMICAL CO LTD) 05 November 2009 (2009-11-05) | 1-7 |
| A | JP 2001-199961 A (FUJI PHOTO FILM CO LTD) 24 July 2001 (2001-07-24) | 1-7 |
| A | JP 2019-1977 A (DAIHATSU MOTOR CO LTD) 10 January 2019 (2019-01-10) | 1-7 |
| A | JP 2016-85794 A (DAIHATSU MOTOR CO LTD) 19 May 2016 (2016-05-19) | 1-7 |
| A | JP 2017-526804 A (DIOXIDE MATERIALS, INC) 14 September 2017 (2017-09-14) | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/011700**

| Patent document cited in search report | Publication date (day/month/year) | Patent family member(s) | Publication date (day/month/year) |
|---|---|---|---|
| JP 2009-256654 A | 05 November 2009 | US 2011/0020731 A1<br>WO 2009/119903 A1<br>EP 2270104 A1 | |
| JP 2001-199961 A | 24 July 2001 | US 2001/0026890 A1 | |
| JP 2019-1977 A | 10 January 2019 | (Family: none) | |
| JP 2016-85794 A | 19 May 2016 | (Family: none) | |
| JP 2017-526804 A | 14 September 2017 | US 2016/0107154 A1<br>CN 110177828 A<br>KR 10-2019-0103250 A<br>WO 2016/064440 A1<br>CA 2941423 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002367626 A
- JP 2009203455 A
- JP 2019518809 T
- JP 2011202074 A
- JP 2000331693 A